# EUROPEAN PATENT APPLICATION

(11) **EP 1 548 752 A1**
(43) Date of publication of application: **29.06.2005**
(21) Application number: 03445150.0
(22) Date of filing: 23.12.2003
(51) Int. Cl.: H01B 1/24, C08K 3/04

(54) **Semi-conducting shield for an electric power cable**

(71) Applicant: Borealis Technology Oy, 06101 Porvoo (FI)
(72) Inventor: Campus, Alfred, 1262 Eysins (CH); Jäger, Karl-Michael, 417 29 Göteborg (SE); Rydin, Peter, 444 95 Ödsmal (SE)
(74) Representative: Bjerre, Nils B.J.

(57) **Abstract**

A semi-conductive polymer composition, a semi-conductive shield for an electric power cable, and the use of a furnace black for a semi-conductive shield are disclosed. The semi-conductive polymer composition is based on an olefinic polymer, preferably an ethylene (co)polymer and contains furnace black having a DBPA of 90-110 cm³/g; an iodine adsorption number of 85-140 g/kg; and a particle size of less than 29 nm.

## Description

### Field of the invention

The present invention relates to a semi-conducting polymer composition which is based on a polyethylene polymer and contains furnace black. The invention further relates to a semi-conducting shield for an electric power cable, and to the use of a specific carbon black in such a semi-conducting shield.

### Background of the invention

Electric cables and particularly electric power cables for medium and high voltages are composed of a plurality of polymer layers extruded around the electric conductor. The electric conductor is usually coated first with an inner semi-conducting layer (the inner shield) followed by an insulating layer, then an outer semi-conducting layer (the outer shield). To these layers further layers may be added, such as a water barrier layer and a sheath layer.

The insulating layer and the semi-conducting layers normally consist of ethylene homo- and/or copolymers which preferably are cross-linked. LDPE (low density polyethylene, i.e. polyethylene prepared by radical polymerisation at a high pressure) cross-linked by adding peroxide, for instance dicumyl peroxide, in connection with the extrusion of the cable, is today the predominant cable insulating material. The inner semi-conducting layer normally comprises an ethylene copolymer, such as an ethylene-vinyl acetate copolymer (EVA). The composition of the outer semi-conducting layer differs depending on whether it has to be strippable or not. Normally a strippable semi-conducting layer comprises an ethylene copolymer, such as an EVA together with an acrylonitrile-butadiene rubber (NBR) and sufficient carbon black to make the composition semi-conducting. A non-strippable (bonded), outer semi-conducting layer may comprise EVA, EMA, EEA or EBA together with an amount of carbon black sufficient to make the composition semi-conducting.

Different types of carbon black such as acetylene black or furnace black, may be used to make the polymer of the semi-conducting inner or outer shield semi-conducting. Generally, in semi-conducting compositions for semi-conducting shield layers according to prior art the carbon blacks used may be divided into four main categories, characterised by the bulkiness of their structure measured as DBP absorption and by their specific surface area measured as iodine number or nitrogen adsorption.

The first category is characterised by a high surface area, determined as the iodine (I₂) number according to ASTM 1510-98 or as the nitrogen adsorption (N₂ or B.E.T.) surface area according to ASTM D 3037-93 or 4820-97, of more than 140 g/kg or 140 m²/g, respectively, and a high structure, determined as the dibutyl phtalate absorption (DBPA) number according to ASTM D 2414-97, of more than 120 cm³/100 g. As examples of such carbon blacks may be mentioned Ketjenblack (N₂ = 800 m²/g; DBPA = 365 cm³/100 g), Vulcan XC72 (N₂ = 254 m²/g; DBPA = 174 cm³/100 g), Black Pearls 2000 (N₂ = 1475 m²/g; DBPA = 380 cm³/100 g) and Printex L6 (I₂ = 300 g/kg; DBPA = 120 cm³/100 g). See e.g. U.S. patent 5,725,650.

The second category is characterised by a low surface area value of less than 105 (I₂ or N₂) and a high structure of more than 110 cm³/100 g (DBPA). As examples of such carbon blacks may be mentioned Denka Black (I₂ = 85 g/kg; DBPA = 200 cm³/100 g), Ensaco 250 (I₂ = 80 g/kg; DBPA = 190 cm³/100 g), Elftex 280 (I₂ = 44 g/kg; DBPA = 123 cm³/100 g). See e.g. U.S. patents 5,733,480 and 6,482,386.

The third category is characterised by a high surface area value of more than 140 (I₂ or N₂) and a low structure of less than 120 cm³/100 g (DBPA). As examples of such carbon blacks may be mentioned N110 (I₂ = 145 g/kg; DBPA = 113 cm³/100 g), Vulcan PA90 (I₂ = 170 g/kg; DBPA = 117 cm³/100 g), N293 (I₂ = 145 g/kg; DBPA = 100 cm³/100 g). See e.g. U.S. patents 5,733,480 and 6,482,386.

The fourth category is characterised by a low surface area of less than 85 g/kg (I₂) and a low structure of less than 105 cm³/100 g (DBPA). As examples of such carbon blacks may be mentioned N754 (I₂ = 24 g/kg; DBPA = 58 cm³/100 g), N762 (I₂ = 27 g/kg; DBPA = 65 cm³/100 g), and N330 (I₂ = 82 g/kg; DBPA = 102 cm³/100 g). See e.g. U.S. patent 6,284,374. The type, grade and amount of carbon black used are important to the properties of the semi-conducting composition used to prepare the semi-conducting shield.

Thus, the semi-conducting composition should have a high conductivity (low resistivity) to fulfil its purpose as a semi-conducting shield. Further, the semi-conducting composition should be easy to process into a semi-conducting shield layer. This means that the composition should have low viscosity when processed. The viscosity of the composition may be measured as the melt flow rate (MFR) of the composition, where a high MFR value means a low viscosity. The carbon black should also be easy to disperse in the polymer. Further, the carbon black should provide a composition with good mechanical properties such as tensile strength and elongation at break. Still further, the semi-conducting composition should give a semi-conducting shield layer with high surface smoothness. A high surface smoothness is important for avoiding electrical break-down of the electric cable.

The conductivity (resistivity) of the semi-conducting composition is dependent on the particle size and surface area of the carbon black, the bulkiness or structure of the carbon black, and the amount of the carbon black. Thus, conductivity increases with an increased amount of carbon black which generally lies in the range 20 to 50 % by weight of carbon black based on the composition. Further, the conductivity of the composition increases with increasing surface area and structure of the carbon black and decreasing primary particle size. Therefore, carbon black types of category one require generally a lower loading than types of category two and three in order to impart a sufficient conductivity, while types of category four require generally a higher loading than the latter.

The processability is generally enhanced (low viscosity; high MFR) with those carbon black types that provide a suitable conductivity by a larger surface area (category one and three), while types with smaller surface areas and higher structures (category two) or types requiring higher loading (category four) tend to have a higher viscosity.

The mechanical properties (elongation at break) of compounds with suitable conductivity and given carbon black loading increase with lower structure (lower DBPA). Therefore, carbon black types of category one requiring lower loading and types of category three having lower structures provide generally enhanced mechanical properties compared to types of category two and four.

However, those carbon black types of category one and three having large surface areas and particularly, those of the latter having small primary particles sizes are generally difficult to disperse. This results in an increased number of surface protuberances sizing in orders of tens of millimetres well seen by the naked eye.

It is realised from the above that the requirements placed on a carbon black to be used in a semi-conducting composition for an electric power cable are in many ways contradictory.

This is summarised in table 1 for illustration purpose.

**Table 1**

| General effect of carbon black characteristics on properties of semi-conducting compounds | | | | |
|---|---|---|---|---|
| Category | 1 | 2 | 3 | 4 |
| DBPA | >120 | >110 | <120 | <105 |
| Iodine | >140 | <105 | >140 | <85 |
| CB loading | ++ | + | + | - |
| Processability | + | - | + | - |
| Surface smoothness | - | + | - | - |
| Mechanical properties | + | - | + | - |
| Cost | -- | | | + |

It is therefore very difficult to find a carbon black that is optimal in all respects, i.e. achieves a desired high conductivity together with good dispersability, high surface smoothness, good processability and good mechanical properties due to the contradictory nature of these properties. As a consequence the prior art compositions represent compromises with regard to one or more of these aspects.

As an example of the prior art may be mentioned U.S. patent 4,702,860 which relates to a current-conducting composition of a polymeric base such as polyethylene and a chemically modified conducting carbon black. As carbon black furnace carbon blacks are used having a surface area of 60-110 m²/g, a structure (DBPA) of 95-125 ml/g, and a particle size of 38-42 nm. Due to the large particle size the furnace black has a low conductivity and to compensate for this low conductivity a higher amount of furnace black is needed. To achieve an increased, stable conductivity the carbon black is treated with a 5 % aqueous solution of borax or boric acid, dried at 110-120°C, and heat treated in a weak reducing medium at 2000-2500°C so that the carbon black is chemically combined with 0.18-0.5 % of boron. The boric acid is not bonded to the polymer and may lead to decreased water tree resistance.

Another example of the prior art is U.S. patent 5,352,289 which relates to a furnace carbon black with low levels of ash and sulphur and which is suited for cable shielding applications, such as the semi-conductive shielding compounds for electric power cables. The object of the patent is to prepare a low cost furnace black with similar low contents of ash and sulphur impurities as a more expensive acetylene black. The furnace black contains at most 50 ppm ash and at most 50 ppm sulphur. The carbon black also has a surface area (CTAB) of 30-135 m²/g and a structure (DBPA) of 105-170 cm³/100 g. According to one aspect the surface area (CTAB) is 120-135 m²/g and the structure (DBPA) is 105-130 cm³/100 g and according to another aspect the surface area (CTAB) is 30-45 m²/g and the structure (DBPA) is 105-130 cm³/100 g. Nothing is disclosed about the primary particle size of the carbon black, and particularly not that it should be less than 29 nm.

Still another example of the prior art is U.S. patent 6,086,792 which relates to a semi-conducting composition useful in the preparation of semi-conducting shields for electric power cables. The composition comprises a polymeric phase and carbon black. The carbon black has (a) a particle size of at least 29 nm; (b) a tint strength of less than 100 %; (c) a loss of volatiles at 950°C in N₂ of less than 1 % by weight; (d) a DBPA value of 80-300 cm³/100 g; (e) a nitrogen surface area of 30-300 m²/g or an iodine adsorption number of 30-300 g/kg; (f) a CTAB surface area of 30-150 m²/g; and (g) a ratio of (e):(f) of greater than 1.1. The large particle size of at least 29 nm is disclosed as a particular advantage.

Yet another example of the prior art is U.S. patent 6,482,386 which relates to a conductive carbon black and a semiconductive insulation shield composition where the carbon black has a nitrogen surface area of 65-95 m²/g; an iodine adsorption number of 64-120 mg/g; a tint strength of 90 % or less; and a ASTM particle size of 22-39 nm. Preferably, the carbon black has a DBPA value of 119-128 cm³/100 g. Also, preferably, the iodine number is 80-85 mg/g, and the particle size is 30-38 nm.

It would represent an important progress if the above-mentioned deficiencies and problems of the prior art could be alleviated or eliminated and a carbon black with a good balance of properties could be provided.

### Summary of the invention

It is an object of the present invention to alleviate or eliminate the deficiencies and problems of the prior art and provide a carbon black for a semi-conducting composition intended for a semi-conducting shield of an electric power cable that has a good balance of properties including achieving the desired conductivity at a similar carbon black loading as conventional carbon blacks.

It is another object to provide a carbon black that is easy to disperse in the polymer composition.

It is yet another object to provide a carbon black that gives a high surface smoothness.

It is still another object to provide a carbon black that gives a good processability (low viscosity) to the polymer composition.

It is a still further object to provide a carbon black that provides good mechanical properties (elongation at break) to the polymer composition.

These and other objects are achieved according to the present invention by a semi-conductive polymer composition which is based on an olefinic polymer and contains carbon black, characterised in that it contains furnace black having a DBPA of 90-110 cm³/g; an iodine adsorption number of 85-140 g/kg; and a particle size of less than 29 nm.

According to another aspect the present invention provides a semi-conductive shield for an electric power cable, characterised in that it comprises a semi-conductive polymer composition based on an olefinic polymer and furnace black having a DBPA of 90-110 cm³/g; an iodine adsorption number of 85-140 g/kg; and a particle size of less than 29 nm.

According to a further aspect the present invention provides the use of a furnace black having a DBPA of 90-110 cm³/g; an iodine adsorption number of 85-140 g/kg; and a particle size of less than 29 nm, as the carbon black for a semi-conductive shield of an electric power cable.

These and other advantages and characterising features of the present invention will appear from the following specification and the appended claims.

### Detailed description of the invention

As stated above, the present invention provides a semi-conductive polymer composition that contains furnace black having a DBPA of 90-110 cm³/g; an iodine adsorption number of 85-140 g/kg; and a particle size of less than 29 nm.

By the expression "semi-conductive" used herein is understood a composition which has a volume resistivity between 10° and 10⁵ Ohm.cm measured at temperatures between 20°C and 130°C. Such semi-conductive compositions generally have a carbon black content of 20-50 % by weight, preferably 25-40 % by weight.

The iodine surface area is small enough (compared to the carbon black types of category one and three above) to enable a good dispersion despite the small primary particle size. On the other hand, the small primary particle size enhances the conductivity, so that the carbon black imparts sufficient conductivity despite lower structure (compared to the carbon black type of category two above) at loading levels commonly used in semi-conducting compounds. Clearly, this specific balance of surface area, particle size and structure optimises benefits of carbon black types of prior art in order to overcome their deficits.

The bulkiness or structure of the furnace black is expressed as the dibutyl phtalate absorption (DBPA) number in cm³/g according to ASTM D 2414-97. The DBPA number of the furnace black of the present invention is 90-110 cm³/g, preferably 92-105 cm³/g.

The surface area of the furnace black is expressed as the iodine (I₂) number in g/kg according to ASTM 1510-98. The iodine number of the furnace black of the present invention is 85-140 g/kg, preferably 100-140 g/kg, and more preferably 110-135 g/kg.

The particle size of the furnace black relates to the primary particle size and is expressed as the arithmetic mean particle diameter measured in nanometers (nm) with transmission electron microscopy according to ASTM D 3849-95a. The particle size of the furnace black of the present invention is less than 29 nm, preferably less than 25 nm.

The tint strength of the furnace black is expressed as the percentage reflectance according to ASTM D 3265-97. The tint strength is an indication of the particle size of the carbon black, but is also dependent on its structure and aggregate size distribution. Therefore, the tint strength is characteristic for the good balance of carbon black properties. The tint strength of the furnace black of the present invention is at least 90 %, preferably at least 100%.

The processability of the semi-conducting polymer composition of the present invention is determined in terms of its melt flow rate (MFR). The MFR is equivalent to the term "melt index" previously used and is determined according to ISO 1133 and is indicated in g/10 min. The MFR is an indication of the flowability, and hence the processability, of the polymer. The higher the melt flow rate, the lower the viscosity of the polymer. The MFR is determined at different loadings, such as 2.1 kg (MFR₂; ISO 1133, condition D) typically used for characterising the base polymer or 21 kg (MFR₂₁; ISO1133 typically used for characterising the semi-conducting composition. Unless otherwise stated "MFR" when used herein means MFR₂₁.

As preferred examples of furnace blacks according to the present invention may be mentioned Elftex TP (I₂ = 128 g/kg; DBPA = 98 cm³/g; particle size ≤ 20 nm); Raven PFE (I₂ = 118 g/kg; DBPA = 100 cm³/g; particle size ≤ 25 nm) ; and Printex alpha (I₂ = 118 g/kg; DBPA = 98 cm³/g; particle size ≤ 20 nm).

As stated above, the present invention provides a semi-conducting polymer composition which is based on an olefinic polymer. The olefinic polymer is preferably a C₂-C₁₄ olefin (co)polymer, i.e. a homo or copolymer of one or more olefinic monomers with 2-14 carbon atoms. Preferably the olefinic polymer is an ethylene (co)polymer. The ethylene (co)polymer may be an ethylene homo- or copolymer which preferably is cross-linked as has been described previously. The ethylene (co)polymer may comprise one or more comonomers selected among monomers, which are copolymerisable with ethylene. Such monomers are well-known to those skilled in the art and no extensive enumeration will be required, but as examples, mention may be made of vinylically unsaturated monomers, such as C₃-C₈ alpha olefins, for instance propene, butene, etc; vinylically unsaturated monomers containing functional groups, such as hydroxyl groups, alkoxy groups, carbonyl groups, carboxyl groups and ester groups. Such monomers may consist of, for instance, (meth)acrylic acid and alkyl esters thereof, such as methyl-, ethyl- and butyl(meth)acrylate; vinylically unsaturated, hydrolysable silane monomers, such as vinyltrimethoxy silane; vinyl acetate, etc.

The amount of further comonomer(s) in addition to the main monomer (preferably ethylene) is from 0 to about 50 % by weight, preferably about 1-30 % by weight.

Regarding the above-mentioned monomers, the sum of all the monomer contents is 100 % by weight.

The olefinic polymer of the semi-conductive polymer composition of the present invention may be prepared by polymerising the monomers under any suitable conditions resulting in the formation of the desired polymer.

Thus, the olefinic polymer, such as preferably an ethylene (co)polymer, can be prepared by free-radical-initiated high-pressure polymerisation. Such polymerisation is well-known in the art and is generally carried out by reacting, in a reactor, such as an autoclave or a tube reactor, at a high pressure of about 100-300 MPa and an elevated temperature of about 80-300°C, the monomers under the influence of a radical initiator, such as a peroxide, hydroperoxide, oxygen or azo compound. When the reaction is completed, the temperature and pressure are lowered, and the resulting polymer is recovered. For further details regarding the production of ethylene polymers by high-pressure polymerisation during free-radical-initiation, reference can be made to Encyclopedia of Polymer Science and Engineering, Volume 6 (1986), pp 383-410, especially pp 404-407.

The semi-conducting polymer composition of the present invention may include conventional additives such as antioxidants, curing agents, processing aids, fillers, UV absorbers (stabilisers), lubricants, etc. such as are known by the person skilled in the art. Such additives may be used in an amount of generally about 0.01-10 % by weight based on the composition.

The semi-conducting polymer composition may be prepared by incorporating the carbon black and any additives into the base polymer. This is preferably done by compounding the base polymer, the carbon black and any additives in a compounding apparatus such as a Banbury^{TM} mixer or a single or twin screw extruder.

Preparation of the semi-conducting shield of the present invention is carried out by forming the semi-conducting polymer composition into a layer of the desired thickness, preferably by extrusion of the semi-conducting polymer composition with an extruder. The preparation of the semi-conducting shield is preferably done in connection with the manufacture of an electric power cable, wherein the conductor of the cable is coated, in the order mentioned by an inner shield, an insulating layer, an outer shield, and any further layers, such as a water barrier layer and a sheath layer, if necessary. The inner and outer shields may comprise the semi-conducting polymer composition of the present invention. Preferably the layers of the cable are applied by co-extrusion.

Having thus described the present invention above it will now be illustrated by way of some non-limiting examples. In the examples all percentages and parts are by weight, unless otherwise stated.

### Example 1

This example illustrates the good dispersability of the carbon black of the present invention.

Carbon black was mixed into an ethylene-methyl acrylate copolymer (EMA) characterised by a methyl acrylate content of 8 % by weight, a density of 930 kg/m³ and an MFR₂ of 3.5 g/10 minutes. Five different types of furnace blacks were used, three furnace blacks according to the present invention and two prior art carbon blacks.

The carbon blacks of the present invention were: carbon black A (I₂ = 128 g/kg, DBPA = 98 cm³/g, primary particle size ≤ 20 nm); carbon black B (I₂ = 118 g/kg, DBPA = 100 cm³/g, primary particle size ≤ 25 nm); and carbon black C (I₂ = 118 g/kg, DBPA = 98 cm³/g, primary particle size ≤ 20 nm).

The two prior art carbon blacks were: carbon black D (I₂ = 81 g/kg, DBPA = 131 cm³/g, primary particle size > 29 nm) corresponding to the carbon black type of category two above; and carbon black E (I₂ = 160 g/kg, DBPA = 111 cm³/g, primary particle size ≤ 20 nm); corresponding to the carbon black type of category three above.

The amount of carbon black was 33 % by weight of the composition. The compounds were extruded into tapes (about 1 mm thick and 200 mm wide) and on-line inspected by an automated optical system. Thus, about 1 m² tape of each sample was evaluated and the result was expressed in number of surface protuberances per square meter corresponding to a size class of protuberance (table 2). The thus determined surface smoothness is a measure of dispersability.

**Table 2**

| Size (µm) | >150 | >200 | >300 | >400 | >500 |
|---|---|---|---|---|---|
| CB A | 366 | 26 | 4 | 4 | 4 |
| CB B | 325 | 42 | 1 | 0 | 0 |
| CB C | 416 | 46 | 4 | 2 | 2 |
| CB D | 1317 | 48 | 26 | 15 | 0 |
| CB E | 416 | 162 | 34 | 19 | 16 |

It is evident from table 2 that the carbon blacks of the present invention (A-C) show a surface smoothness (low number of protuberances) at least as good as the carbon black with a small surface area (D) and an improved dispersion compared to the large surface area carbon black E.

### Example 2

This example illustrates the good rheological properties in terms of low viscosity (high MFR; i.e. good processability) of the semi-conducting polymer compositions according to the present invention.

Semi-conducting shields for electric power cables were prepared using an ethylene-butyl acrylate copolymer (EBA) as the base polymer (butyl acrylate content 17 % by weight; density 925 kg/m³; MFR₂ 7 g/10 minutes) and using the same ethylene-methyl acrylate copolymer (EMA) as in example 1.

Carbon black was incorporated to make the EBA copolymer semi-conducting. Five different types of carbon black were used, three carbon blacks according to the present invention and two prior art carbon blacks.

The carbon blacks according to the present invention were: carbon black A (I₂ = 125 g/kg; DBPA = 98 cm³/g; particle size ≤ 20 nm); carbon black B (I₂ = 118 g/kg; DBPA = 100 cm³/g; particle size ≤ 25 nm) ; and carbon black C (I₂ = 118 g/kg; DBPA = 98 cm³/g; particle size ≤ 20 nm).

The two prior art carbon blacks were: carbon black D (I₂ = 81 g/kg; DBPA = 131 cm³/g; particle size > 29 nm); and carbon black E (I₂ = 160 g/kg; DBPA = 111 cm³/g; particle size ≤ 20 nm).

The five different carbon blacks were incorporated in the EBA copolymer and EMA copolymer in various amounts, see table 3. About 1% of peroxide was added to the EBA and 0.8% was added to the EMA compounds. Each of the semi-conducting polymer compositions were then made into a shield for a power cable and cross-linked. The volume resistivity of the outer semi-conducting shields was determined according to ISO 3915-1981. The results are shown in Table 3.

It is evident from table 3 that at the same conductivity level the carbon blacks of the present invention give an improved viscosity (higher MFR₂₁) and hence better processability compared to the other easy dispersible carbon black D that corresponds to the carbon black type of category two above. Further, the carbon blacks of the present invention give a viscosity at least comparable with, or improved compared to carbon black E that corresponds to the carbon black type of category three above. Furthermore, it is evident from table 3 that at the same loading level the carbon blacks of the present invention give an improved viscosity (higher MFR₂₁) and hence better processability compared to the other easy dispersible carbon black D that corresponds to the carbon black type of category two above.

It is also evident from table 3 that the carbon blacks of the present invention impart suitable or higher electrical conductivity at the same loading level compared to prior art carbon blacks. Thus, it is evident from the data in table 3 that the carbon blacks of the present invention impart at the same loading level at least the same conductivity as the prior art carbon black E despite having a significantly smaller surface area. Furthermore, the carbon blacks of the present invention having a particle size less than 29 nm impart at the same loading a higher conductivity as the prior art carbon black D having a particle size greater than 29 nm despite having a lower structure (DBPA). This surprising result points at the importance of the specific balance of carbon black properties including an iodine adsorption number of 85-140, a DBPA of 90-110 and a primary particles size of less than 29 nm providing a suitable conductivity despite relatively small surface area and structure.

**Table 3**

| CB type | Base polymer | CB content [%] | VR [Ohm cm] | MFR_{21,190}°C [g/10 min] |
|---|---|---|---|---|
| CB A | EBA | 31.9 | 5730 | 79.13 |
| CB A | EBA | 34.6 | 1285 | 56.84 |
| CB B | EBA | 36.2 | 877 | 33.83 |
| CB B | EBA | 40.7 | 209 | 11.57 |
| CB C | EBA | 36.1 | 2115 | 44.99 |
| CB C | EBA | 38.9 | 1140 | 31.89 |
| CB D | EBA | 35 | 8290 | 38.67 |
| CB D | EBA | 38 | 2220 | 21.3 |
| CB D | EBA | 40.6 | 754 | 9.82 |
| CB E | EBA | 35.1 | 3863 | 47.69 |
| CB E | EBA | 37.0 | 1547 | 37.09 |
| CB E | EBA | 39.0 | 740 | 24.55 |
| CB A | EMA | 33 | 4240 | 47 |
| CB B | EMA | 33 | 1900 | 36 |
| CB C | EMA | 33 | 4330 | 45 |
| CB D | EMA | 33 | 6790 | 28 |

### Example 3

This example illustrates the good mechanical properties in terms of high elongation at break of the semi-conducting polymer compositions according to the present invention.

The same ethylene-methyl acrylate copolymer compounds as in example 2 containing about 0.8 % peroxide were extruded into tapes. The tapes were pressure moulded into plaques at a temperature high enough to enable the plaques to cross-link. Test specimens for tensile testing according to ISO 527-25A were cut from the plaques and tested at room temperature using a tensile speed of 25 mm/min. The results are shown in table 4.

**Table 4**

| | Elongation at break [%] |
|---|---|
| CB A | 247 |
| CB B | 232 |
| CB C | 269 |
| CB D | 219 |
| CB E | 227 |

It is evident from table 4 that the carbon blacks of the present invention give better mechanical properties (elongation at break) than the prior art carbon black D corresponding to the carbon black type of category two above and at least as good or better mechanical properties than the prior art carbon black E corresponding to the carbon black type of category three above.

### Example 4

This example illustrates the tint strength as a further important feature of the present invention. It is clear from above that the use of carbon blacks of the present invention leads to improvements with respect to processability and mechanical properties compared to easy dispersable carbon blacks of category two above, while their compounds show at least a similar surface smoothness. At the same time, the latter property is improved compared to prior art carbon blacks of category three above. Furthermore, it is clear from above that this is due to their specific balance of particle size, specific surface area and structure. The tint strength of carbon black is a property affected by a complex interplay of primary particle size and particle size distribution, as well as aggregate size (a specific feature of the structure) and aggregate size distribution. Therefore, it provides an additional aspect of the specific balance of carbon black properties.

The tint strength of carbon blacks A-E was measured according to ASTM D 3265. The results are shown in table 5.

**Table 5**

| | Tint strength [%] |
|---|---|
| CB A | 104 |
| CB B | 107 |
| CB C | 107 |
| CB D | 80 |
| CB E | 92 |

It is evident from table 5 that the tint strength values should be high. In order to work according to the invention the values should be at least 90% and preferably at least 100%. The tint strength provides a further aspect of the specific carbon black properties according to the present invention.

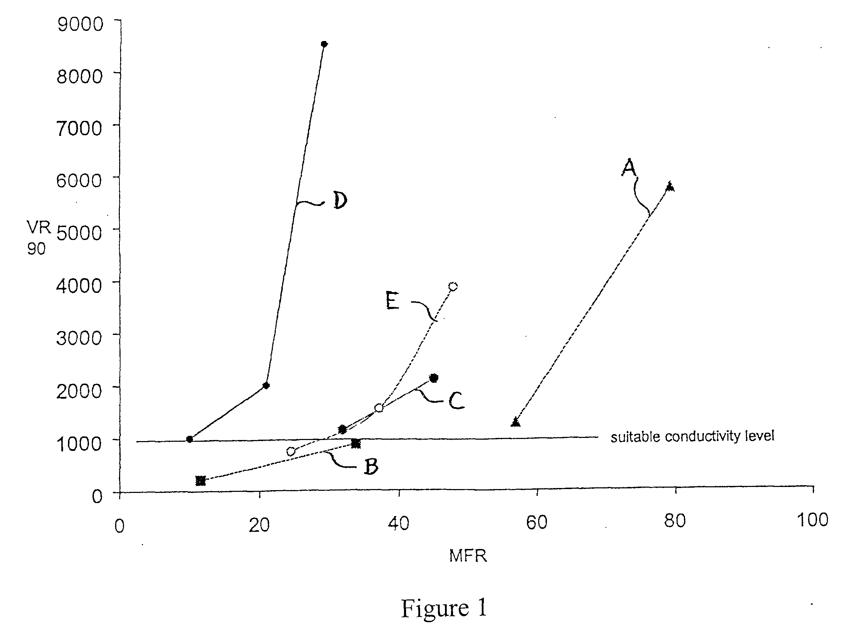

## Claims

1. A semi-conductive polymer composition which is based on an olefinic polymer and contains carbon black, **characterised in that** the carbon black is furnace black having a DBPA of 90-110 cm³/g; an iodine adsorption number of 85-140 g/kg; and a particle size of less than 29 nm.

2. A semi-conductive polymer composition as claimed in claim 1, wherein the furnace black has a tint strength of more than 90 %.

3. A semi-conductive shield for an electric power cable, **characterised in that** it comprises a semi-conductive polymer composition based on an olefinic polymer and furnace black having a DBPA of 90-110 cm³/g; an iodine adsorption number of 85-140 g/kg; and a particle size of less than 29 nm.

4. A semi-conductive shield as claimed in claim 3, wherein the furnace black has a tint strength of more than 90 %.

5. A semi-conductive shield as claimed in claim 3 or 4, wherein the shield is an inner shield of an electric power cable.

6. A semi-conductive shield as claimed in claim 3 or 4, wherein the shield is an outer shield of an electric power cable.

7. A semi-conductive shield as claimed in claim 6, wherein the shield is a bonded shield which comprises a cross-linked semi-conductive polymer composition.

8. A semi-conductive shield as claimed in claim 7, wherein the polymer composition is cross-linked with a peroxide.

9. The use of a furnace black having a DBPA of 90-110 cm³/g; an iodine adsorption number of 85-140 g/kg; and a particle size of less than 29 nm, as the carbon black for a semi-conductive shield of an electric power cable.

10. The use as claimed in claim 9, wherein the furnace black has a tint strength of at least 90 %.
